**Europäisches Patentamt**

**European Patent Office**

**Office européen des brevets**

(19)

(11) Veröffentlichungsnummer: **0 281 936 B1**

## (12) EUROPÄISCHE PATENTSCHRIFT

(45) Veröffentlichungstag der Patentschrift: **03.06.92**

(21) Anmeldenummer: **88103254.4**

(22) Anmeldetag: **03.03.88**

Verbunden mit 88902131.7/0348415
(europäische
Anmeldenummer/Veröffentlichungsnummer)
durch Entscheidung vom 12.06.90.

(51) Int. Cl.5: **C09D 17/00**, C09D 5/02,
//C09D5/38

(54) **Wässrige Schichtsilikatdispersionen, Verwendung dieser Dispersionen als Lackhilfsmittel und wasserverdünnbare, Schichtsilikate enthaltende Beschichtungszusammensetzungen.**

(30) Priorität: **07.03.87 DE 3707388**

(43) Veröffentlichungstag der Anmeldung:
**14.09.88 Patentblatt 88/37**

(45) Bekanntmachung des Hinweises auf die
Patenterteilung:
**03.06.92 Patentblatt 92/23**

(84) Benannte Vertragsstaaten:
**AT BE CH DE ES FR GB IT LI NL SE**

(56) Entgegenhaltungen:
**EP-A- 0 011 752**
**DE-A- 3 120 286**
**US-A- 3 687 885**

(73) Patentinhaber: **BASF Lacke + Farben Aktiengesellschaft**
**Max-Winkelmann-Strasse 80**
**W-4400 Münster(DE)**

(72) Erfinder: **Berg, Ralf**
**Geistkamp 12**
**W-4400 Münster(DE)**
Erfinder: **Müller, Bodo, Dr.**
**Mergentheimer Strasse 8**
**W-8700 Würzburg(DE)**

(74) Vertreter: **Leifert, Elmar, Dr.**
**BASF Lacke + Farben AG Patentabteilung**
**Max-Winkelmann-Strasse 80 Postfach 61 23**
**W-4400 Münster(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft Dispersionen, die aus Schichtsilikaten, einem Schutzkolloid und einem wäßrigen Dispersionsmittel erhältlich sind und zur Einarbeitung von Schichtsilikaten in wasserverdünnbare Beschichtungszusammensetzungen geeignet sind.

Wasserverdünnbare Beschichtungszusammensetzungen, insbesondere solche, die z.B. bei der Automobillackierung durch Spritzapplikation verarbeitet werden sollen, müssen ganz bestimmte rheologische Eigenschaften aufweisen. Eine besonders große Rolle spielen die rheologischen Eigenschaften bei Metallpigmente enthaltenden wasserverdünnbaren Beschichtungszusammensetzungen, die zur Herstellung der Basisschicht einer Zweischichtlackierung des Basecoat-Clearcoat-Typs verwendet werden (vgl. z.B. EP 38 127).

Die rheologischen Eigenschaften wasserverdünnbarer Beschichtungszusammensetzungen beeinflussen die Applikationseigenschaften der Beschichtungszusammensetzungen ganz entscheidend. Bei Metallpigmente enthaltenden wasserverdünnbaren Beschichtungszusammensetzungen hängt die Orientierung der Metallpigmentteilchen und damit der erreichbare Metalleffekt ganz wesentlich von den rheologischen Eigenschaften der Beschichtungszusammensetzungen ab.

Zur Steuerung der rheologischen Eigenschaften wäßriger Beschichtungszusammensetzungen werden in großem Umfang Schichtsilikate eingesetzt. Die Schichtsilikate quellen in Wasser auf und bilden Gele, die unter Scherbeanspruchung eine hohe Fließgrenze und niedrige plastische Viskosität aufweisen.

Die Einarbeitung der Schichtsilikate in die wasserverdünnbaren Beschichtungszusammensetzungen erfolgt vorzugsweise über Dispersionen, die aus einem mit einem ionischen Schutzkolloid (z.B. Tetranatriumpyrophosphat) modifizierten Schichtsilikat und Wasser hergestellt werden. Diese Dispersionen zeigen keinen Gel- sondern Solcharakter und können durch einfaches Zudosieren in die wasserverdünnbaren Beschichtungszusammensetzungen eingearbeitet werden. Beim Zumischen wird die Wirkung des Schutzkolloids aufgehoben, und das Schichtsilikat kann seine Wirkung als Rheologiehilfsmittel entfalten.

Wenn die oben beschriebenen Dispersionen in wasserverdünnbare Beschichtungszusammensetzungen eingearbeitet werden, dann werden Beschichtungszusammensetzungen erhalten, die schlechte Spritzapplikationseigenschaften aufweisen und feuchtigkeitsempfindliche, schlecht haftende Beschichtungen liefern. Diese Schwierigkeiten treten in verstärktem Maße auf bei Metallpigmente, vorzugsweise Aluminiumpigmente in Plättchenform, enthaltenden wasserverdünnbaren Beschichtungszusammensetzungen, die zur Herstellung der Basisschicht einer Zweischichtlackierung des Basecoat-Clearcoat-Type eingesetzt werden sollen. In diesen Fällen werden feuchtigkeitsempfindliche, schlecht haftende Beschichtungen, die nur einen unzureichenden Metalleffekt zeigen, erhalten.

Der Erdindung liegt die Aufgabe zugrunde, Schichtsilikatdispersionen bereitzustellen, die problemlos in wasserverdünnbare Beschichtungszusammensetzungen eingearbeitet werden können und mit deren Hilfe wasserverdünnbare Beschichtungszusammensetzungen erhalten werden können, die optimale rheologische Eigenschaften und gute Spritzapplikationseigenschaften aufweisen und die feuchtigkeitsunempfindliche, gut haftende Beschichtungen liefern. Der Erfindung liegt insbesondere die Aufgabe zugrunde, Schichtsilikatdispersionen bereitzustellen, die problemlos in metallpigmenthaltige wasserverdünnbare Beschichtungszusammensetzungen, die zur Herstellung der Basisschicht einer Zweischichtlackierung des Basecoat-Clearcoat-Typs geeignet sind, eingearbeitet werden können und mit deren Hilfe metallpigmenthaltige wasserverdünnbare Beschichtungszusammensetzungen erhalten werden können, die optimale rheologische Eigenschaften und gute Spritzapplikationseigenschaften aufweisen und die zu effektstarken, feuchtigkeitsunempfindlichen, gut haftenden Zweischichtemetalleffektlackierungen des Basecoat-Clearcoat-Typs verarbeitet werden können.

Diese Aufgabe wird erfindungsgemäß durch Dispersionen der eingangs genannten Art gelöst, die dadurch gekennzeichnet sind, daß sie unter Verwendung von Poly(propylenoxid) als Schutzkolloid erhältlich sind, wobei das Poly(propylenoxid) keine hydrophoben Endgruppen enthält, im Mittel mindestens eine Hydroxylgruppe prop Molekül aufweist und ggf. bis zu 40 Gew.-% $-CH_2-CH_2-O-$ Einheiten enthalten kann.

Die Erfindung betrifft auch wasserverdünnbare Beschichtungszusammensetzungen, die ein Schichtsilikat, Wasser, Bindemittel, ggf. Pigmente, organische Lösemittel und weitere übliche Zusätze enthalten und die erhältlich sind, indem das Schichtsilikat über eine Dispersion, die aus Schichtsilikat, einem Schutzkolloid und einem wäßrigen Dispersionsmittel erhältlich ist, in die Beschichtungszusammensetzungen eingearbeitet wird, dadurch gekennzeichnet, daß das Schichtsilikat über eine Dispersion, die unter Verwendung von Poly(propylenoxid) als Schutzkolloid erhältlich ist, in die Beschichtungszusammensetzungen eingearbeitet wird, wobei das Poly(propylenoxid) keine hydrophoben Endgruppen enthält, im Mittel mindestens eine Hydroxylgruppe pro Molekül aufweist und ggf. bis zu 40 Gew.-% $-CH_2-CH_2-O-$ Einheiten enthalten kann.

Die Erfindung betrifft auch eine Verfahren zur Einarbeitung von Schichtsilikaten in wasserverdünnbare Beschichtungszusammensetzungen, bei dem die Schichtsilikate durch Inkorporation von Dispersionen, die aus Schichtsilikat, einem Schutzkolloid und einem wäßrigen Dispersionsmittel erhältlich sind, in die Beschichtungszusammensetzungen eingearbeitet werden und das dadurch gekennzeichnet ist, daß die Schichtsilikate über Dispersionen eingearbeitet werden, die unter Verwendung von Poly(propylenoxid) als Schutzkolloid erhältlich sind, wobei das Poly(propylenoxid) keine hydrophoben Endgruppen enthält, im Mittel mindestens eine Hydroxylgruppe pro Molekül aufweist und ggf. bis zu 40 Gew.-% -$CH_2$-$CH_2$-O- Einheiten enthalten kann.

Die Erfindung betrifft auch die Verwendung der oben beschriebenen Dispersionen als Lackhilfsmittel zur Einarbeitung von Schichtsilikaten in wasserverdünnbare Beschichtungszusammensetzungen, insbesondere in wasserverdünnbare Beschichtungszusammensetzungen, die Pigmente - bevorzugt Metallpigmente - enthalten und zur Herstellung von Basisschichten zon Zweischichtlackierungen des Basecoat-Clearcoat-Typs geeignet sind.

In der US-PS-3,687,885 werden wasserverdünnbare Beschichtungszusammensetzungen offenbart, die aus einer Dispersion eines aus ethylenisch ungesättigten Monomeren hergestellten Polymeren, einem Schichtsilikat, einem nichtionischen Tensid und einem Verdickungsmittel bestehen. Als nichtionische Tenside werden alkoxylierte Alkylphenole und alkoxylierte Alkohole, die aus 8 bis 22 Kohlenstoffatomen aufgebaut sind, verwendet. Die in der US-PS-3,687,885 beschriebenen Überzugszusammensetzungen enthalten keine Metallpigmente und sind zur Herstellung der Basisschicht einer Metalleffektlackierung des Basecoat-Clearcoat-Typs völlig ungeeignet. Der Durchschnittsfachmann kann der US-PS-3,687,885 keinerlei Hinweise zur Lösung der der vorliegenden Erfindung zugrundeliegenden Aufgabenstellung entnehmen.

In der EP-A-11752 werden Füllstoff-Polyol-Dispersionen offenbart, die insbesondere zur Herstellung von Polyurethanen eingesetzt werden. Eine derartige Verwendung ist nur möglich, wenn die Dispersionen im wesentlichen wasserfrei sind. Außerdem weisen die in der EP-A-11752 offenbarten Dispersionen so hohe Viskositäten auf, daß sie in wäßrige Beschichtungszusammensetzungen nicht homogen eingearbeitet werden können, was zu Problemen bei der Applikation und zu Oberflächenstörungen im applizierten Lackfilm führt. Der Durchschnittsfachmann kann der EP-A-11752 keinerlei Hinweise zur Lösung der der vorliegenden Erfindung zugrundeliegenden Aufgabenstellung entnehmen.

Schichtsilikate, die zur Steuerung der rheologischen Eigenschaften wäßriger Beschichtungszusammensetzungen geeignet sind, sind dem Fachmann gut bekannt (vgl. z.B. H. Kittel, Lehrbuch der Beschichtungen, Bd. II, Seite 340, und Bd. III, Seite 272 bis Seite 274; Verlag W.A. Colomb 1974, 1976). Es handelt sich hierbei vor allem um Aluminium-Magnesium-Silikatverbindungen vom Typ Montmorillonit, z.B. Attapulgit, Bentonit oder Hectorit. Hectorit wird oft mit der ungefähren Summenformel $Na_{0,67}(Mg,Li)_6$ $Si_8O_{20}(OH,F)_4$, wobei Li und F auch fehlen können, beschrieben.

Erfindungsgemäß können sowohl natürliche als auch synthetisch hergestellte Schichtsilikate eingesetzt werden. Vorzugsweise werden synthetisch hergestellte Natrium-Magnesium- bzw. Natrium-Magnesium-Fluor-Lithium-Schichtsilikate des Montmorillonit-Typs eingesetzt.

Selbstverständlich sind auch Mischungen unterschiedlicher Schichtsilikate einsetzbar.

Als Schutzkolloid wird erfindungsgemäß Poly-(propylenoxid) eingesetzt, das keine hydrophoben Endgruppen enthält, im Mittel mindestens eine Hydroxylgruppe pro Molekül aufweist und ggf. bis zu 40 Gew.-% -$CH_2$-$CH_2$-O- Einheiten enthalten kann.

Unter dem Begriff Poly(propylenoxid) werden Verbindungen verstanden, die aus mindestens 2 Struktureinheiten der Formel -$CHCH_3$-$CH_2$-O- aufgebaut sind.

Unter hydrophoben Endgruppen werden Gruppierungen verstanden, die einen wesentlichen Einfluß auf die oberflächenaktiven Eigenschaften der Poly(propylenoxide) haben und die sich in der Regel von hydrophoben Verbindungen ableiten, die mehr als 6 Kohlenstoffatome enthalten. Als Beispiele für solche Endgruppenbildner seien Alkylphenole, langkettige aliphatische Alkohole wie z.B. Fettalkohole, langkettige aliphatische Amine wie z.B. Fettamine, langkettige aliphatische Carbonsäuren wie z.B. Fettsäuren und langkettige aliphatische Carbonsäureamide wie z.B. Fettsäureamide genannt.

Die ggf. eingebauten -$CH_2$-$CH_2$-O- Einheiten können statistisch verteilt sein, es können aber auch Blockcopolymere vorliegen, wobei letztere gegenüber ersteren bevorzugt sind. Geeignete Blockcopolymere sind Copolymere, die ein mittleres Molekulargewicht von 500 bis 8000, bevorzugt 1000 bis 5000, aufweisen und die bis zu 40, bevorzugt 10 bis 30, besonders bevorzugt 10 bis 20 Gew.-% -$CH_2$-$CH_2$-O- Einheiten enthalten. Von den Blockcopolymeren, die unter Normalbedingungen fest sind, sind nur diejenigen geeignet, die wasserlöslich sind. Die unter Normalbedingungen als Flüssigkeiten vorliegenden Blockcopolymere müssen nicht unbedingt in Wasser löslich sein.

Bevorzugt werden Poly(propylenoxid)-homopolymere als Schutzkolloide eingesetzt. Besonders bevorzugt werden Poly(propylenoxid)-

homopolymere verwendet, die ein mittleres Molekulargewicht von 400 bis 1000, ganz besonders bevorzugt etwa 9000, aufweisen, vorzugsweise aus unverzweigten Molekülen aufgebaut sind und vorzugsweise im Mittel zwei Hydroxylgruppen pro Molekül enthalten.

Unter Poly(propylenoxid)homopolymeren werden Verbindungen verstanden, die - mit Ausnahme eventuell eingebauter Endgruppen bzw. Starterverbindungen - im wesentlichen nur aus -CHCH$_3$-CH$_2$O- Einheiten aufgebaut sind. Die Formulierung "im wesentlichen" soll ausdrücken, daß die Verwendung von Poly(propylenoxid)homopolymeren, die geringe Mengen an Fremdmonomeren (z.B. Butylenoxid) enthalten, auch zu brauchbaren Schichtsilikatdispersionen führen kann.

Die erfindungsgemäß einzusetzenden Polyl(propylenoxide) können in bekannter Weise durch Polymerisation von Propylenoxid bzw. durch Propoxylierung geeigneter Startermoleküle wie z.B. Glycerin, Trimethylolpropan, Hexantriol, Pentaerythrit, Sorbit, Sacchrose, Ethylendiamin, Carbonsäuren, Carbonsäureamiden usw. hergestellt werden (die Einführung von -CH$_2$-CH$_2$-O-Gruppen erfolgt durch Copolymerisation mit Ethylenoxid) und sind in großer Auswahl im Handel erhältlich.

Die Schichtsilikate werden in einem wäßrigen Dispersionsmittel dispergiert. Als Dispersionsmittel wird bevorzugt ausschließlich Wasser, ganz besonders bevorzugt deionisiertes Wasser, verwendet. Das Wasser kann ggf. noch vorzugsweise wasserverdünnbar organische Lösungsmittel wie z.B. Butanol, Butylglykol, Ethylenglykoldimethylether, Cyclohexanon, Aceton usw. enthalten.

Zur Herstellung der erfindungsgemäßen Dispersionen wird das Schichtsilikat mit dem Poly(propylenoxid) in Substanz oder vorzugsweise in Gegenwart des wäßrigen Dispersionsmittels innig vermischt. Diese Vermischung erfolgt vorzugsweise unter Anwendung hoher Scherkräfte (Dissolver).

Die erfindungsgemßäen Dispersionen bestehen aus 1 bis 10 Gew.-% Schichtsilikat, 0,3 bis 15 Gew.-% Poly(propylenoxid) und 98,7 bis 75 Gew.-% wäßrigem Dispersionsmittel. Auf 1 Gew.-Teil Schichtsilikat werden 0,3 bis 2 Gew.-Teile Poly(propylenoxid) eingesetzt.

Eine bevorzugte Herstellungsweise der erfindungsgemäß einzusetzenden Dispersionen besteht darin, daß zunächst das zu dispergierende Schichtsilikat in einem Teil des insgesamt einzusetzenden Wassers mit Hilfe eines Dissolvers dispergiert wird. Zu dieser Dispersion wird dann die entsprechende Menge des einzusetzenden Poly(propylenoxids) zugegeben, und es wird unter Anwendung sehr hoher Scherkräfte weiter dispergiert. Schließlich wird das restliche Wasser unter sehr starkem Rühren (Dissolver) zugegeben, und es wird alsbald eine gebrauchsfertige Schichtsilikatdispersion erhalten, die problemlos in wasserverdünnbare Beschichtungszusammensetzungen eingearbeitet werden kann.

Wasserverdünnbare Beschichtungszusammensetzungen enthalten Wasser, wasserverdünnbare Bindemittel, ggf. Pigmente, organische Lösemittel und weitere übliche Zusätze. Es handelt sich dabei vorzugsweise um Einbrennlacke, d.h. wasserdünnbare Beschichtungszusammensetzungen, die unter Einwirkung von Hitze auf dem Substrat gehärtet werden.

Die wasserverdünnbaren Beschichtungszusammensetzungen können im Prinzip alle für wasserverdünnbare Beschichtungszusammensetzungen geeigneten Bindemittel enthalten. Als Beispiele seien wasserverdünnbarer Polyester-, Polyacrylat-, Polyurethan- oder Aminoplastharze genannt.

Die erfindungsgemäßen Schichtsilikatdispersionen werden bevorzugt in wasserverdünnbare Beschichtungszusammensetzungen eingearbeitet, die Pigmente - bevorzugt Metallpigmente, besonders bevorzugt Aluminiumpigmente in Plättchenform - enthalten und die zur Herstellung der Basisschicht einer Zweischichtlackierung des Basecoat-Clearcoat-Typs geeignet sind. Beispiele für solche Beschichtungszusammensetzungen sind in der US-PS-4,558,090 und der Europäischen Patentanmeldung EP 158 099 zu finden. Bevorzugte Beschichtungszusammensetzungen dieser Art enthalten wasserverdünnbare Polyurethanharze, ggf. zusammen mit wasserverdünnbaren Polyester-und/oder Polyacrylatharzen als Bindemittel sowie geeignete Vernetzungsmittel.

Die erfindungsgemäßen Dispersionen werden in solchen Mengen in die wasserverdünnbaren Beschichtungszusammensetzungen gegeben, daß die wasserverdünnbaren Beschichtungszusammensetzungen 0,5 bis 10 Gew.-% Schichtsilikat, bezogen auf den Bindemittelfestkörper, enthalten. In den Fällen, in denen keine Metallpigmente enthalten sind, werden 0,5 bis 5 Gew.-%, vorzugsweise 1,4 bis 3 Gew.-% Schichtsilikat, bezogen auf den Bindemittelfestkörper, eingesetzt. In Metallpigmente enthaltenden Beschichtungszusammensetzungen werden 2 bis 10 Gew.-%, vorzugsweise 4 bis 6 Gew.-% Schichtsilikat, bezogen auf den Bindemittelfestkörper, eingesetzt.

Die Einarbeitung der erfindungsgemäßen Dispersionen in die wasserverdünnbaren Beschichtungszusammensetzungen kann in der Regel zu jedem beliebigen Zeitpunkt des Produktionsvorgangs der wasserverdünnbaren Beschichtungszusammensetzungen nach allgemein gut bekannten Methoden erfolgen.

Wenn die erfindungsgemäßen Schichtsilikatdispersionen in wasserverdünnbare Beschichtungszusammensetzungen eingearbeitet werden, dann werden Beschichtungszusammensetzungen erhalten, die ausgezeichnete Spritzapplikationseigenschaften aufweisen und feuchtigkeitsunempfindliche, gut haftende Beschichtungen liefern. Die erfindungsgemäßen Schichtsilikatdispersionen zeigen besonders vorteilhafte Wirkung, wenn sie in metallpigmenthaltige, wasserverdünnbare Beschichtungszusammensetzungen eingearbeitet werden, die zur Herstellung der Basisschicht einer Zweischichtlackierung des Basecoat-Clearcoat-Typs geeignet sind. Die auf diese Weise erhaltenen Beschichtungszusammensetzungen zeigen optimale rheologische Eigenschaften und gute Spritzapplikationseigenschaften und können zu effektstarken, feuchtigkeitsunempfindlichen, gut haftenden Zweischichtmetalleffektlackierungen des Basecoat-Clearcoat-Typs verarbeitet werden.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiel 1

4 Gew.-Teile eines gereinigten Natrium-Magnesium-Fluor-Lithium-Schichtsilikats vom Montmorillonittyp werden unter starkem Rühren (Dissolver: 3.000 bis 4.000 Umdrehungen pro Minute) langsam zu 50 Gew.-Teilen deionisiertem Wasser gegeben. Danach werden unter starkem Rühren 4 Gew.-Teile eines unverzweigten Poly-(propylenoxids) mit einem mittleren Molekulargewicht von 900 und einer OH-Zahl von 125 zugegeben, und es wird 15 Minuten weiter gerührt. Danach erfolgt die Zugabe von weiteren 42 Gew.-Teilen deionisierten Wassers, und es wird noch 15 Minuten weitergerührt.

Beispiel 2

4 Gew.-Teile eines gereinigten, mit Tetranatriumpyrophosphat als Schutzkolloid modifizierten Natrium-Magnesium-Fluor-Lithium-Schichtsilikats vom Type Montmorillonit werden unter starkem Rühren (Dissolver: 3.000 bis 4.000 Umdrehungen pro Minute) zu 50 Gew.-Teilen deionisiertem Wasser gegeben. Nach der Zugabe wird noch 15 Minuten weitergerührt. Danach werden weitere 46 Gew.-Teile deionisiertes Wasser unter starkem Rühren zugegeben, und es wird weitere 15 Minuten weitergerührt.

Beispiel 3

Die nach Beispiel 1 und 2 erhaltenen Schichtsilikatdispersionen werden unter äquivalenten Bedingungen in die in den Patentbeispielen der EP-A-89497 und US-PS-4,489,135 bzw. 4,558,090 beschriebenen wasserverdünnbaren Basisbeschichtungszusammensetzungen eingearbeitet.

Die so hergestellten Basisbeschichtungszusammensetzungen werden durch Spritzapplikation auf gebonderte Stahlbleche appliziert und nach einer Zwischenablüftzeit von 15 Minuten bei Raumtemperatur (ca. 20°C) wie in der EP-A-89497 und den US-Patentschriften 4,489,135 sowie 4,558,090 beschrieben mit einem Klarlack überzogen und eingebrannt.

Die unter Verwendung der nach Beispiel 1 hergestellten Schichtsilikatdispersion hergestellten Basisbeschichtungszusammensetzungen sind den Basisbeschichtungszusammensetzungen, die unter Verwendung der in Beispiel 2 hergestellten Schichtsilikatdispersion hergestellt worden sind, in folgenden Punkten deutlich überlegen:
a) Ablaufneigung des Basislacks,
b) metallischer Effekt,
c) Beständigkeit der Zweischichtlackierung gegen Feuchtigkeit (Kondenswasserkonstantklima: 10 Tage, 40°C, 100 % relative Luftfeuchte),
d) Haftung der Lackierung nach Feuchtigkeitsbelastung.

**Patentansprüche**

1. Dispersionen, die aus Schichtsilikaten, einem Schutzkolloid und einem wäßrigen Dispersionsmittel erhältlich sind und zur Einarbeitung von Schichtsilikaten in wasserverdünnbare Beschichtungszusammensetzungen geeignet sind, dadurch gekennzeichnet, daß sie zu 98,7 bis 75 Gew.-% aus wäßrigem Dispersionsmittel bestehen und unter Verwendung von Poly-(propylenoxid) als Schutzkolloid erhältlich sind, wobei das Poly(propylenoxid) keine hydrophoben Endgruppen enthält, im Mittel mindestens eine Hydroxylgruppe pro Molekül aufweist und ggf. bis zu 40 Gew.-% $-CH_2-CH_2-O-$ Einheiten enthalten kann.

2. Dispersionen nach Anspruch 1, dadurch gekennzeichnet, daß sie unter Verwendung von Poly(propylenoxid)homopolymeren als Schutzkolloid erhältlich sind, wobei die Poly-(propylenoxid)homopolymere vorzugsweise ein mittleres Molekulargewicht von 400 bis 1000 aufweisen, vorzugsweise aus unverzweigten Molekülen aufgebaut sind und vorzugsweise im Mittel zwei Hydroxylgruppen pro Molekül enthalten.

3. Dispersionen nach Anspruch 2, dadurch gekennzeichnet, daß sie unter Verwendung eines Poly(propylenoxid)homopolymers als Schutzkolloid erhältlich sind, wobei das Poly-(propylenoxid)homopolymer ein mittleres Molekulargewicht von etwa 900 aufweist.

4. Dispersionen nach einem der Ansprüche 1 bis 3, dadurch gekennzeichnet, daß sie als wäßriges Dispersionsmittel ausschließlich Wasser enthalten.

5. Dispersionen nach einem der Ansprüche 1 bis 4, dadurch gekennzeichnet, daß sie aus 1 bis 10 Gew.-% Schichtsilikat, 0,3 bis 15 Gew.-% Poly(propylenoxid) und 98,7 bis 75 Gew.-% wäßrigem Dispersionsmittel bestehen.

6. Dispersionen nach einem der Ansprüche 1 bis 5, dadurch gekennzeichnet, daß sie pro Gewichtsteil Schichtsilikat 0,3 bis 2 Gew.-Teile Poly(propylenoxid) enthalten.

7. Wasserverdünnbare Beschichtungszusammensetzungen, die eine Schichtsilikat, Wasser, Bindemittel, ggf. Pigmente, organische Lösemittel und weitere übliche Zusätze enthalten und die erhältlich sind, indem das Schichtsilikat über eine Dispersion, die aus Schichtsilikat, einem Schutzkolloid und einem wäßrigen Dispersionsmittel erhältlich ist, in die Beschichtugnszusammensetzungen eingearbeitet wird, dadurch gekennzeichnet, daß das Schichtsilikat über eine Dispersion, die unter Verwendung von Poly(propylenoixd) als Schutzkolloid erhältlich ist, in die Beschichtungszusammensetzungen eingearbeitet wird, wobei das Poly(propylenoxid) keine hydrophoben Endgruppen enthält, im Mittel mindestens eine Hydroxylgruppe pro Molekül aufweist und ggf. bis zu 40 Gew.-% $-CH_2-CH_2-O-$Einheiten enthalten kann.

8. Wasserverdünnbare Beschichtungszusammensetzungen nach Anspruch 7, dadurch gekennzeichnet, daß sie Pigmente, bevorzugt Metallpigmente, enthalten und zur Herstellung der Basisschicht einer Zweischichtlackierung des Basecoat-Clearcoat-Typs geeignet sind.

9. Wasserverdünnbare Beschichtungszusammensetzungen nach einem der Ansprüche 7 oder 8, dadurch gekennzeichnet, daß das Schichtsilikat über eine Dispersion, die unter Verwendung von Poly(propylenoxid)homopolymeren als Schutzkolloid erhältlich ist, in die Beschichtungszusammensetzungen eingearbeitet wird, wobei die Poly(propylenoxid)homopolymere vorzugsweise ein mittleres Molekulargewicht von 400 bis 1000 aufweisen, vorzugsweise aus unverzweigten Molekülen aufgebaut sind und vorzugsweise im Mittel zwei Hydroxylgruppen pro Molekül enthalten.

10. Wasserverdünnbare Beschichtungszusammensetzungen nach Anspruch 9, dadurch gekennzeichnet, daß das Schichtsilikat über eine Dispersion, die unter Verwendung eines Poly(propylenoxid)homopolymeren mit einem mittleren Molekulargewicht von etwa 900 erhältlich ist, in die Beschichtungszusammensetzungen eingearbeitet wird.

11. Wasserverdünnbare Beschichtungszusammensetzungen nach einem der Ansprüche 7 bis 10, dadurch gekennzeichnet, daß das Schichtsilikat über eine Dispersion in die Beschichtungszusammensetzungen eingearbeitet wird, die als wäßriges Dispersionsmittel ausschließlich Wasser enthält.

12. Wasserdünnbare Beschichtungszusammensetzungen nach einem der Ansprüche 7 bis 11, dadurch gekennzeichnet, daß das Schichtsilikat über eine Dispersion in die Beschichtungszusammensetzungen eingearbeitet wird, die aus 1 bis 10 Gew.-% Schichtsilikat, 0,3 bis 15 Gew.-% Poly(propylenoxid) und 98,7 bis 75 Gew.-% wäßrigem Dispersionsmittel besteht.

13. Verfahren zur Einarbeitung von Schichtsilikaten in wasserverdünnbare Beschichtungszusammensetzungen, bei dem die Schichtsilikate durch Inkorporation von Dispersionen, die aus Schichtsilikate, einem Schutzkolloid und einem wäßrigen Dispersionsmittel erhältlich sind, in die Beschichtungszusammensetzungen eingearbeitet werden, dadurch gekennzeichnet, daß die Schichtsilikate über Dispersionen eingearbeitet werden, die unter Verwendung von Poly(propylenoxid) als Schutzkolloid erhältlich sind, wobei das Poly(propylenoixd) keine hydrophoben Endgruppen enthält, im Mittel mindestens eine Hydroxylgruppe pro Molekül aufweist und ggf. bis zu 40 Gew.-% $-CH_2-CH_2-O-$ Einheiten enthalten kann.

14. Verwendung der Dispersionen nach einem der Ansprüche 1 bis 6 als Lackhilfsmittel zur Einarbeitung von Schichtsilikaten in wasserverdünnbare Beschichtungszusammensetzungen.

15. Verwendung der Dispersionen nach einem der Ansprüche 1 bis 6 als Lackhilfsmittel zur Einarbeitung von Schichtsilikaten in wasserverdünnbare Beschichtungszusammensetzungen, die Pigmente, bevorzugt Metallpigmente, enthalten und zur Herstellung von Basisschichten von Zweischichtlackierungen des Basecoat-Clearcoat-Typs geeignet sind.

**Claims**

1. A dispersion which is obtainable from sheet silicates, a protective colloid and an aqueous dispersant and is suitable for incorporation of sheet silicates into water-dilutable coating compositions, wherein the said dispersion comprises 98.7 to 75% by weight of aqueous dispersants and is obtainable using poly-(propylene oxide) as a protective colloid, and the poly(propylene oxide) contains no hydrophobic terminal groups, has on average at least one hydroxyl group per molecule and may optionally contain up to 40% by weight of -CH$_2$-CH$_2$-O- units.

2. A dispersion as claimed in Claim 1, wherein the said dispersion is obtainable using poly-(propylene oxide) homopolymers as a protective colloid, and the poly(propylene oxide) homopolymers preferably have a mean molecular weight of from 400 to 1,000, are preferably composed of straight-chain molecules and preferably contain on average two hydroxyl groups per molecule.

3. A dispersion as claimed in claim 2, wherein the said dispersion is obtainable using a poly-(propylene oxide) homopolymer as a protective colloid, and the poly(propylene oxide) homopolymer has a mean molecular weight of about 900.

4. A dispersion as claimed in any of claims 1 to 3, wherein the said dispersion contains exclusively water as the aqueous dispersant.

5. A dispersion as claimed in any of claims 1 to 4, wherein the said dispersion consists of from 1 to 10% by weight of sheet silicate, from 0.3 to 15% by weight of poly(propylene oxide) and from 98.7 to 75% by weight of aqueous dispersant.

6. A dispersion as claimed in any of claims 1 to 5, wherein the said dispersion contains from 0.3 to 2 parts by weight of poly(propylene oxide) per part by weight of sheet silicate.

7. A water-dilutable coating composition which contains a sheet silicate, water, binders, if necessary pigments, organic solvents and further conventional additives and is obtainable by incorporating the sheet silicate into the coating composition via a dispersion which is obtainable from sheet silicate, a protective colloid and an aqueous dispersant, wherein the sheet silicate is incorporated into the coating composition via a dispersion which is obtainable using poly(propylene oxide) as the protective colloid and the poly(propylene oxide) contains no hydrophobic terminal groups, has on average at least one hydroxyl group per molecule and may optionally contain up to 40% by weight of -CH$_2$-CH$_2$-O- units.

8. A water-dilutable coating composition as claimed in claim 7, wherein the said coating composition contains pigments, preferably metallic pigments, and is suitable for the production of the base coat of a two-coat system of the base coat/clear coat type.

9. A water-dilutable coating composition as claimed in claim 7 or 8, wherein the sheet silicate is incorporated into the coating composition via a dispersion which is obtainable using poly(propylene oxide) homopolymers as a protective colloid, and the poly(propylene oxide) homopolymers preferably have a mean molecular weight of from 400 to 1,000, are preferably straight-chain molecules and on average preferably contain two hydroxyl groups per molecule.

10. A water-dilutable coating composition as claimed in claim 9, wherein the sheet silicate is incorporated into the coating composition via a dispersion which is obtainable using a poly-(propylene oxide) homopolymer having a mean molecular weight of about 900.

11. A water-dilutable coating composition as claimed in any of claims 7 to 10, wherein the sheet silicate is incorporated into the coating composition via a dispersion which contains exclusively water as the aqueous dispersant.

12. A water-dilutable coating composition as claimed in any of claims 7 to 11, wherein the sheet silicate is incorporated into the coating composition via a dispersion which consists of from 1 to 10% by weight of sheet silicate, from 0.3 to 15% by weight of poly(propylene oxide) and from 98.7 to 75% by weight of aqueous dispersant.

13. A process for incorporating sheet silicates into water-dilutable coating compositions, in which the sheet silicates are incorporated into the coating compositions by incorporating dispersions which are obtainable from the sheet silicate, a protective colloid and an aqueous dispersant, wherein the sheet silicates are incorporated via dispersions which are obtainable using poly(propylene oxide) as the protective colloid, and the poly(propylene oxide) contains no hydrophobic terminal groups, has on average at least one hydroxyl group per molecule and may optionally contain up to 40% by weight of $-CH_2-CH_2-O-$ units.

14. Use of a dispersion as claimed in any of claims 1 to 6 as a coating assistant for incorporating sheet silicates into water-dilutable coating compositions.

15. Use of a dispersion as claimed in any of claims 1 to 6 as a coating assistant for incorporating sheet silicates into water-dilutable coating compositions which contain pigments, preferably metallic pigments, and are suitable for the production of base coats of two-coat systems of the base coat/clear coat type.

**Revendications**

1. Dispersions, qui peuvent être obtenues à partir de silicates feuilletés, d'un colloïde protecteur et d'un agent de dispersion aqueux, et qui sont appropriées pour l'incorporation de silicates feuilletés dans des compositions de revêtement diluables dans l'eau, caractérisées par le fait qu'elles se composent, à 98,7 à 75% en poids, de l'agent de dispersion aqueux, et qu'elles peuvent être obtenues avec utilisation de polyoxypropylène comme colloïde protecteur, le polyoxypropylène ne contenant pas de groupes terminaux hydrophobes, présentant en moyenne au moins un groupe hydroxyle par molécule et pouvant contenir le cas échéant jusqu'à 40% en poids d'unités $-CH_2-CH_2-O-$.

2. Dispersions selon la revendication 1, caractérisées par le fait qu'elles peuvent être obtenues avec utilisation d'homopolymères de polyoxypropylène comme colloïde protecteur, les homopolymères de polyoxypropylène présentant, de préférence, une masse moléculaire moyenne de 400 à 1000, étant constitués, de préférence, de molécules non ramifiées, et contenant, de préférence, en moyenne deux groupes hydroxyle par molécule.

3. Dispersions selon la revendication 2, caractérisées par le fait qu'elles peuvent être obtenues avec utilisation d'un homopolymère de polyoxypropylène comme colloïde protecteur, l'homopolymère de polyoxypropylène présentant une masse moléculaire moyenne d'environ 900.

4. Dispersions selon l'une quelconque des revendications 1 à 3, caractérisées par le fait qu'elles contiennent exclusivement de l'eau comme agent de dispersion aqueux.

5. Dispersions selon l'une quelconque des revendications 1 à 4, caractérisées par le fait qu'elles se composent de 1 à 10% en poids de silicate feuilleté, de 0,3 à 15% en poids de polyoxypropylène, et de 98,7 à 75% en poids d'agent de dispersion aqueux.

6. Dispersions selon l'une quelconque des revendications 1 à 5, caractérisées par le fait qu'elles contiennent, par partie en poids de silicate feuilleté, 0,3 à 2 parties en poids de polyoxypropylène.

7. Compositions de revêtement diluables dans l'eau, qui contiennent un silicate feuilleté, de l'eau, des liants, le cas échéant des pigments, des solvants organiques et autres additifs usuels, et qui peuvent être obtenues en incorporant le silicate feuilleté dans les compositions de revêtement, par l'intermédiaire d'une dispersion qui peut être obtenue à partir de silicate feuilleté, d'un colloïde protecteur et d'un agent de dispersion aqueux, caractérisées par le fait que le silicate feuilleté est incorporé dans les compositions de revêtement par l'intermédiaire d'une dispersion qui peut être obtenue avec utilisation de polyoxypropylène comme colloïde protecteur, le polyoxypropylène ne contenant pas de groupes terminaux hydrophobes, présentant en moyenne au moins un groupe hydroxyle par molécule et pouvant contenir le cas échéant jusqu'à 40% en poids d'unités $-CH_2-CH_2-O-$.

8. Compositions de revêtement diluables dans l'eau selon la revendication 7, caractérisées par le fait qu'elles contiennent des pigments, de préférence, des pigments métalliques, et qu'elles sont appropriées pour la fabrication de la couche de base d'un laquage à deux couches du type revêtement de base - revêtement transparent.

9. Compositions de revêtement diluables dans l'eau selon l'une quelconque des revendications 7 et 8, caractérisées par le fait que le silicate feuilleté est incorporé dans les compositions de revêtement par l'intermédiaire d'une dispersion qui peut être obtenue avec utilisation d'homopolymères de polyoxypropylène comme colloïde protecteur, les homopolymères de polyoxypropylène présentant, de préférence, une masse moléculaire moyenne de 400 à 1000, étant constitués, de préférence, de molécules non ramifiées, et contenant, de préférence, en moyenne deux groupes hydroxyle par molécule.

**10.** Compositions de revêtement diluables dans l'eau selon la revendication 9, caractérisées par le fait que le silicate feuilleté est incorporé dans les compositions de revêtement par l'intermédiaire d'une dispersion qui peut être obtenue avec utilisation d'un homopolymère de polyoxypropylène présentant une masse moléculaire moyenne d'environ 900.

**11.** Compositions de revêtement diluables dans l'eau selon l'une quelconque des revendications 7 à 10, caractérisées par le fait que le silicate feuilleté est incorporé dans les compositions de revêtement par l'intermédiaire d'une dispersion qui contient exclusivement de l'eau comme agent de dispersion aqueux.

**12.** Compositions de revêtement diluables dans l'eau selon l'une quelconque des revendications 7 à 11, caractérisées par le fait que le silicate feuilleté est incorporé dans les compositions de revêtement par l'intermédiaire d'une dispersion qui se compose de 1 à 10% en poids de silicate feuilleté, de 0,3 à 15% en poids de polyoxypropylène, et de 98,7 à 75% en poids d'agent de dispersion aqueux.

**13.** Procédé pour incorporer des silicates feuilletés dans des compositions de revêtement diluables dans l'eau, suivant lequel les silicates feuilletés sont incorporés dans les compositions de revêtement par incorporation de dispersions qui peuvent être obtenues à partir de silicate feuilleté, d'un colloïde protecteur et d'un agent de dispersion aqueux, caractérisé par le fait que les silicates feuilletés sont incorporés par l'intermédiaire de dispersions qui peuvent être obtenues avec utilisation de polyoxypropylène comme colloïde protecteur, le polyoxypropylène ne contenant pas de groupes terminaux hydrophobes, contenant en moyenne au moins un groupe hydroxyle par molécule et pouvant contenir, le cas échéant, jusqu'à 40% en poids d'unités -$CH_2$-$CH_2$-O-.

**14.** Utilisation des dispersions telles que définies à l'une quelconque des revendications 1 à 6, comme adjuvant de laquage pour l'incorporation de silicates feuilletés dans des compositions de revêtement diluables dans l'eau.

**15.** Utilisation des dispersions telles que définies à l'une quelconque des revendications 1 à 6, comme adjuvant de laquage pour l'incorporation de silicates feuilletés dans des compositions de revêtement diluables dans l'eau qui contiennent des pigments, de préférence, des pigments métalliques, et qui sont appropriées pour la fabrication de couches de base de laquages à deux couches du type revêtement de base - revêtement transparent.